# EUROPEAN PATENT APPLICATION

(11) **EP 4 773 342 A2**
(43) Date of publication of application: **08.07.2026**
(21) Application number: 25216320.9
(22) Date of filing: 17.11.2025
(51) Int. Cl.: H01M 10/613, H01M 10/643, H01M 10/6551, H01M 10/6556, H01M 10/6567, H01M 50/213

(54) **BATTERY PACK**

(30) Priority: 18.11.2024 KR 20240163757
(71) Applicant: SK On Co., Ltd., Seoul 03161 (KR)
(72) Inventor: KWAK, Seung Il, 34124 Daejeon (KR); JIN, Shanshan, 34124 Daejeon (KR); JEON, Hae Ryong, 34124 Daejeon (KR); LEE, Jung Kwan, 34124 Daejeon (KR); CHANG, Jung Shin, 13558 Seongnam-si (KR)
(74) Representative: Stolmár & Partner Patentanwälte PartG mbB

(57) **Abstract**

A battery pack is disclosed. According to the present disclosure, there is provided a battery pack including one or more battery modules, wherein the battery module includes: a plurality of battery cells disposed between a first cover and a second cover; and an inner column extending in a third direction between adjacent battery cells to dissipate heat transferred from side surfaces of the battery cells to at least one of the first cover and the second cover.

## Description

### BACKGROUND

### 1. Field of the Invention

Embodiments of the present disclosure relate to a battery pack.

### 2. Discussion of Related Art

A secondary battery is one of the energy storage means which can be charged and discharged through electrochemical reactions. The secondary battery is used in various fields in which electrical energy is used. For example, secondary batteries are widely used in mobile devices such as a cell phone, a notebook, a tablet, and the like, and are being explored for wider utilization in the field of transportation means such as vehicles, aircraft, ships, and the like. Further, demand for secondary batteries is increasing in the field of energy storage systems (ESSs) for utilizing surplus electricity.

A plurality of secondary batteries may be electrically connected to each other and used. For example, the secondary battery may be provided as a single unit cell, and a plurality of such battery cells may be combined to provide a single battery pack. In some cases, battery cells may be combined into an intermediate unit such as a battery module and the like, and a plurality of such battery modules may be combined to provide a single battery pack. A battery pack may be provided with a plurality of battery cells connected in series and/or parallel, depending on the voltage, current, or the like required by a load.

### SUMMARY OF THE INVENTION

Some embodiments of the present disclosure are directed to providing a battery pack.

In addition, some embodiments of the present disclosure are directed to providing a battery pack including a cylindrical battery cell.

In addition, some embodiments of the present disclosure are directed to providing a battery pack with improved thermal stability.

In addition, some embodiments of the present disclosure are directed to providing a battery pack with improved assemblability.

In addition, some embodiments of the present disclosure are directed to providing a battery pack with improved structural stability.

Some embodiments of the present disclosure may be widely applied in the field of green technologies such as an electric vehicle and a battery charging station as well as solar power generation and wind power generation using batteries. Further, some embodiments of the present disclosure may be used in an eco-friendly electric vehicle, a hybrid vehicle, and the like to prevent climate change by suppressing air pollution and greenhouse gas emissions.

According to an aspect of the present disclosure, there is provided a battery pack including one or more battery modules, wherein the battery module includes: a plurality of battery cells disposed between a first cover and a second cover; and an inner column extending in a third direction between adjacent battery cells to dissipate heat transferred from side surfaces of the battery cells to at least one of the first cover and the second cover.

In some embodiments, the first cover may include a guide rib extending into a gap between the battery cells, and the guide rib may support one end portion of the side surface of the battery cell adjacent to the first cover.

In some embodiments, one end portion of the inner column in the third direction may be fastened to the guide rib and supported by the guide rib.

In some embodiments, the first cover may include a bus bar insert injection molded into the first cover to electrically connect the plurality of battery cells.

In some embodiments, each of the battery cells may be provided with a vent on one surface disposed toward the second cover, and the second cover may provide a venting flow path which guides venting gas discharged from the vent to an outside of the battery module.

In some embodiments, a side surface of the inner column may be provided with a curved surface concavely recessed to correspond to a shape of the side surface of the battery cell, and may be provided to be in close contact with the side surface of the battery cell, and wherein at least one of an insulating layer for electrical insulation from the battery cell and an adhesive layer that is bonded to the side surface of the battery cell is provided on a side surface of the inner column.

In some embodiments, a plurality of battery modules may be provided, and the battery pack may be provided to support the plurality of battery modules and may have a heat sink bonded to the second cover of each battery module through a thermal interface material.

In some embodiments, a plurality of heat dissipation protrusions extending in a longitudinal direction of the inner column may be provided on the side surface of the inner column so as to be in contact with the side surface of the battery cell.

In some embodiments, the inner column may be provided with a heat dissipation plate at one end in a longitudinal direction.

In some embodiments, the heat dissipation plate may be formed to extend to a predetermined area in a plane direction orthogonal to the longitudinal direction of the inner column.

In some embodiments, at least a portion of the heat dissipation plate may be disposed to be exposed to an outside of the second cover.

In some embodiments, the exposed outer surface of the heat sink may form a plane corresponding to an outer surface of the second cover or may be located lower than the outer surface of the second cover.

In some embodiments, the exposed outer surface of the heat dissipation plate may be bonded to a heat sink disposed on one surface of the second cover through a thermal interface material.

In some embodiments, a plurality of inner columns may be provided to correspond to the plurality of battery cells, and one or more of the pluralities of inner columns may have a hollow extending in a longitudinal direction of the inner column.

In some embodiments, the hollow may be connected to an inner flow path provided in at least one of the first cover and the second cover, and the inner flow path may be provided to supply and discharge a refrigerant from and to the outside.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a perspective view showing a battery module according to one embodiment of the present disclosure;
FIG. 2 is an exploded perspective view of the battery module shown in FIG. 1;
FIG. 3 is a longitudinal cross-sectional view of the battery module shown in FIG. 1;
FIG. 4 is a cross-sectional view of the battery module shown in FIG. 1;
FIG. 5 is a longitudinal cross-sectional view showing a battery pack in which a plurality of battery modules shown in FIG. 3 are combined;
FIG. 6 is a cross-sectional view showing a battery module according to another embodiment of the present disclosure;
FIG. 7 is a longitudinal cross-sectional view showing a battery module according to still another embodiment of the present disclosure;
FIG. 8 is a longitudinal cross-sectional view showing a battery pack in which a plurality of battery modules shown in FIG. 7 are combined; and
FIG. 9 is an exploded perspective view showing a battery module according to yet another embodiment of the present disclosure.

### DETAILED DESCRIPTION OF EXEMPLARY EMBODIMENTS

Hereinafter, the present disclosure will be described in detail with reference to the accompanying drawings. However, this is merely exemplary, and the present disclosure is not limited to the exemplified specific embodiments.

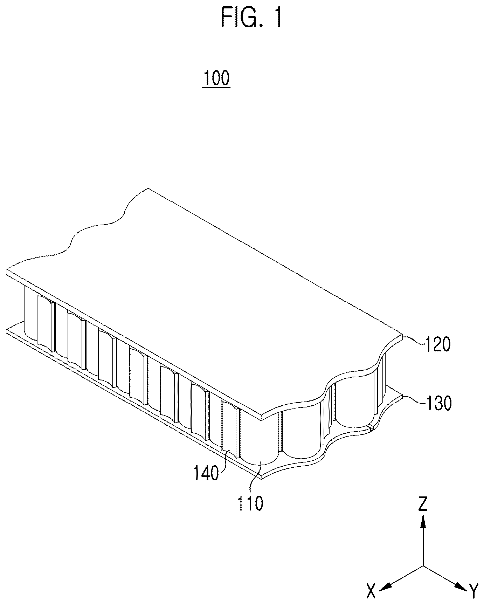

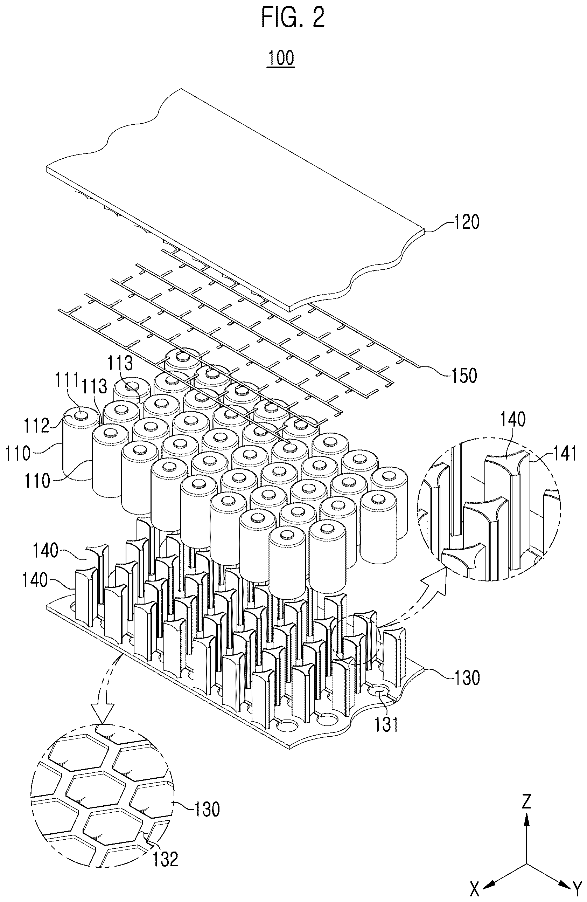

FIG. 1 is a perspective view showing a battery module according to one embodiment of the present disclosure. FIG. 2 is an exploded perspective view of the battery module shown in FIG. 1.

Hereinafter, for convenience, an X-axis direction is referred to as a first direction or left-right direction based on the coordinate axes shown in FIG. 1, a Y-axis direction is referred to as a second direction or front-rear direction, and a Z-axis direction is referred to as a third direction or vertical direction.

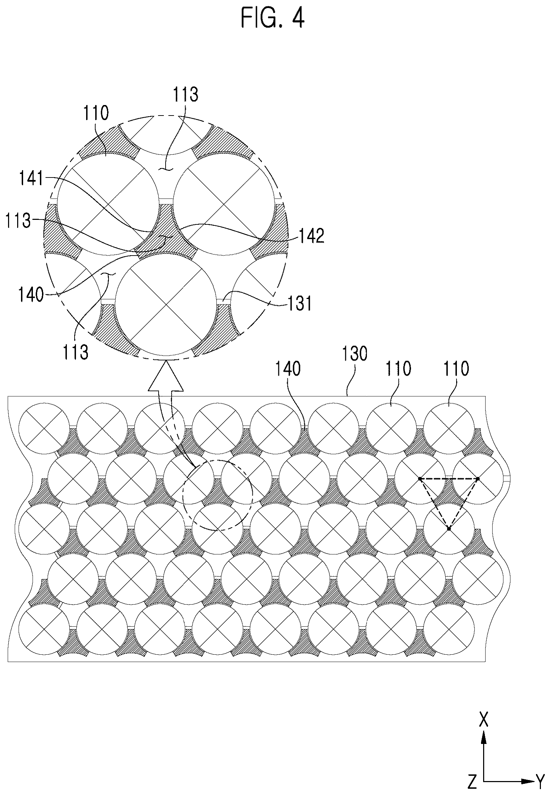

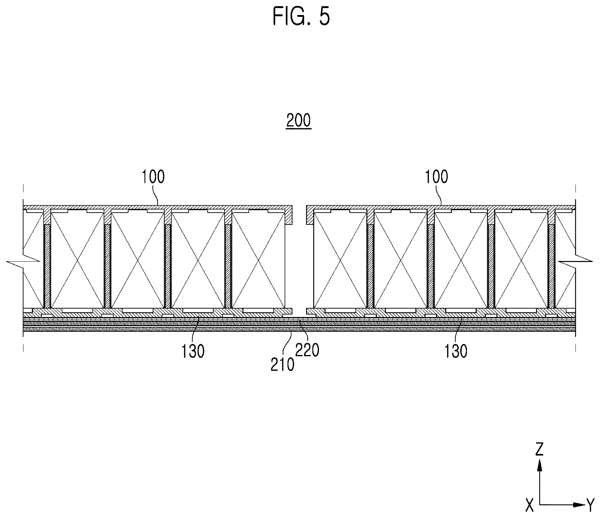

Referring to FIGS. 1 and 2, in some embodiments, a battery module 100 may be provided. The battery module 100 may include a plurality of battery cells 110. In some embodiments, a battery pack 200 (see FIG. 5) may include one or more battery modules 100. For reference, FIGS. 1 and 2 show an internal configuration of one battery module 100, and FIG. 4 to be described below illustrates the battery pack 200 in which a plurality (e.g., two) of battery modules 100 are combined. The battery pack 200 will be described with reference to FIG. 5, and the like, which will be described below, and the battery module 100 constituting the battery pack 200 will be described first.

For reference, in this description, terms such as a battery module, a battery pack, and the like are used separately according to classification names typically used in the art, but the technical idea of the present disclosure is not necessarily limited to such classification names. That is, the terms such as a battery module, a battery pack, and the like may be understood as encompassing a type of battery cell assembly in which a plurality of battery cells are combined. For example, the battery module to be described hereinafter may be expanded into a single battery pack unit, and in this case, the battery module may be understood to have substantially the same meaning as the battery pack.

Meanwhile, in some embodiments, the battery pack 200 includes one or more battery modules 100, and the battery module 100 includes a plurality of battery cells 110 disposed between a first cover 120 and a second cover 130, and an inner column 140 extending in the third direction between adjacent battery cells 110 to dissipate heat transferred from side surfaces of the battery cells 110 to at least one of the first cover 120 and the second cover 130.

Specifically, the battery module 100 may include a plurality of battery cells 110. In some embodiments, the battery cell 110 may be provided in a cylindrical shape having a predetermined diameter and height. For example, the battery cell 110 may have a diameter of 46 mm and a height of 80 mm. In some cases, the battery cell 110 having such a form factor may be referred to as a '4680 battery.' As another example, the battery cell 110 may have a diameter of 46 mm and a height of 80 mm, a diameter of 46 mm and a height of 95 mm, or a diameter of 46 mm and a height of 110 mm. In some cases, the battery cell 110 having such a form factor may be referred to as a '46xx battery.' In the '46xx', 'xx' may describe a height of the corresponding form factor. As still another example, the battery cell 110 may have a diameter of 48 mm and a height of 75 mm, a diameter of 48 mm and a height of 80 mm, or a diameter of 48 mm and a height of 110 mm. In some cases, the battery cell 110 having the form factor may be referred to as a '48xx battery.' In the '48xx', 'xx' may describe a height of the corresponding form factor. However, in the embodiments of the present disclosure, the diameter and height of the battery cell 110 may be variously modified, and are not necessarily limited to those exemplified above.

Meanwhile, although a cylindrical battery cell 110 is shown in the present description, the form factor of the battery cell 110 according to the embodiments of the present disclosure is not necessarily limited to that exemplified. The embodiment of the present disclosure may be appropriately implemented or applied to the battery cell 110 such as a coin-type, a prismatic type, a pouch type, and other non-generalized shapes within the scope that appropriately includes the technical idea to be described below.

In some embodiments, the battery cell 110 may include first and second electrode terminals 111 and 112. The first electrode terminal 111 may be provided as a positive electrode terminal or a negative electrode terminal, and the second electrode terminal 112 may be provided as a negative electrode terminal or a positive electrode terminal corresponding thereto. For example, the first electrode terminal 111 may be provided as a positive electrode terminal, and the second electrode terminal 112 may be provided as a negative electrode terminal.

In some embodiments, the first and second electrode terminals 111 and 112 may be provided on the same surface of the battery cell 110. For example, the first and second electrode terminals 111 and 112 may both be provided on an upper surface area of the battery cell 110 as shown. In addition, the first and second electrode terminals 111 and 112 may be provided in separate areas on one surface (upper surface) of the battery cell 110. For example, the first electrode terminal 111 may be provided in a central area of the upper surface of the battery cell 110 as shown, and the second electrode terminal 112 may be provided in the remaining area of the upper surface of the battery cell 110 excluding the first electrode terminal 111. The first and second electrode terminals 111 and 112 may be electrically insulated from each other through an insulating part such as a gasket or the like.

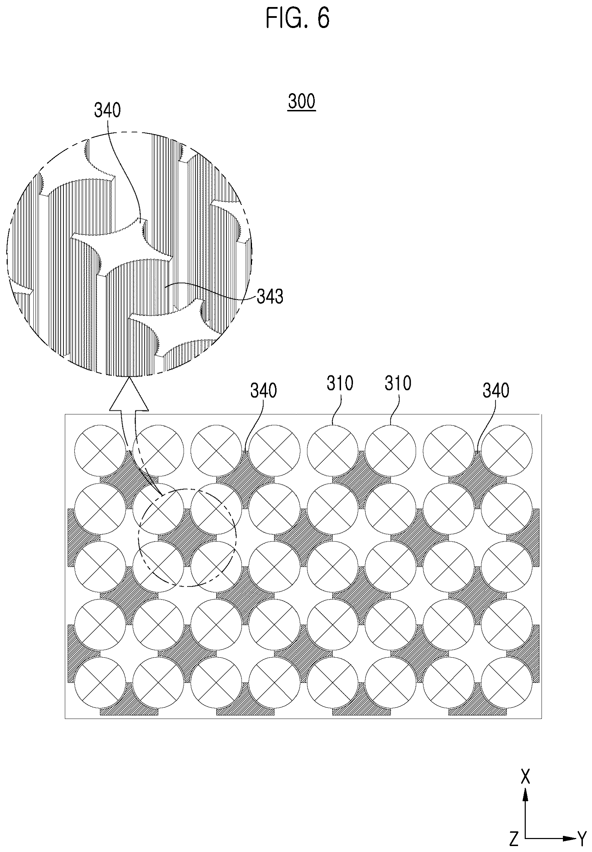

In some embodiments, a plurality of battery cells 110 may be provided. The plurality of battery cells 110 may be disposed to form a predetermined arrangement structure in a plan view. For example, the plurality of battery cells 110 may be arranged in a dense arrangement structure in a plan view as shown. The dense arrangement structure may refer to a structure in which three battery cells 110 are disposed to correspond to each vertex of an equilateral triangle in a plan view. The dense arrangement structure may function to reduce dead space between the cylindrical battery cells 110. As another example, as shown in FIG. 6 to be described below, the plurality of battery cells 110 may be disposed in parallel in the front-rear and left-right directions. However, the plurality of battery cells 110 may be disposed in various arrangement structures other than those exemplified above, and the arrangement structure of the battery cells 110 is not necessarily limited to those exemplified above.

The number of battery cells 110 constituting the battery module 100, the number of battery modules 100 constituting the battery pack 200, and the like may be appropriately selected according to required design conditions, and the like. In the embodiment of the present disclosure, the number of battery cells 110 constituting the battery module 100 and the number of battery modules 100 constituting the battery pack 200 are not particularly limited. Furthermore, as described above, the terms such as a battery module, a battery pack, and the like may be understood as encompassing a type of battery cell assembly in which a plurality of battery cells are combined.

Meanwhile, in some embodiments, the battery module 100 may include a first cover 120 and a second cover 130. The first cover 120 may be coupled to an upper portion of the battery cell 110. In some embodiments, the first cover 120 may function to align a position of the battery cell 110 or electrically connect the plurality of battery cells 110. The second cover 130 may be coupled to a lower portion of the battery cell 110. That is, the plurality of battery cells 110 may be seated and supported on the second cover 130. In some embodiments, the second cover 130 may function to guide a discharge path of venting gas discharged from the battery cell 110 or to properly support the inner column 140.

Although not shown, in some embodiments, the battery module 100 may include a housing for accommodating the battery cell 110 therein. The housing may be provided to be coupled to the first cover 120 and the second cover 130 to form an accommodation space for accommodating the battery cell 110. In some embodiments, some or all of the first cover 120, the second cover 130, and the housing may be internalized or integrated into an installation target. For example, the first cover 120, the second cover 130, and the housing may be partially or entirely internalized or integrated into a vehicle's body, a chassis, or the like. In some cases, such internalization or integration may be referred to as cell to body (CTB) or cell to chassis (CTC) in the art.

Meanwhile, in some embodiments, the battery module 100 may include an inner column 140. The inner column 140 may extend vertically between adjacent battery cells 110. Specifically, in the illustrated embodiment, three battery cells 110 disposed adjacent to each other in a plan view may form a predetermined gap 113 therebetween. In addition, the inner column 140 may be disposed inside the gap 113 and formed to extend vertically.

In some embodiments, a plurality of inner columns 140 may be provided. For example, the plurality of inner columns 140 may be provided between all of the battery cells 110, or may be selectively provided between some of the battery cells 110. Alternatively, when one battery cell 110 is viewed as a center, the inner column 140 may be selectively provided in some of the plurality of gaps 113 disposed around the corresponding battery cell 110. In the illustrated embodiment, it is exemplified that three inner columns 140 are provided for one battery cell 110. That is, in the illustrated embodiment, six gaps 113 are provided around the battery cell 110, and three inner columns 140 are disposed one space apart from each other in the gaps 113. However, the number and arrangement form of the inner columns 140 may be variously modified as needed, and are not necessarily limited to the examples.

In some embodiments, the inner column 140 may be supported by being fastened to the second cover 130. Alternatively, the inner column 140 may be integrally provided on the second cover 130. Additionally, in some embodiments, an upper end of the inner column 140 may be fastened to a guide rib 121, which will be described below. Accordingly, the inner column 140 may be appropriately fixed between the first cover 120 and the second cover 130.

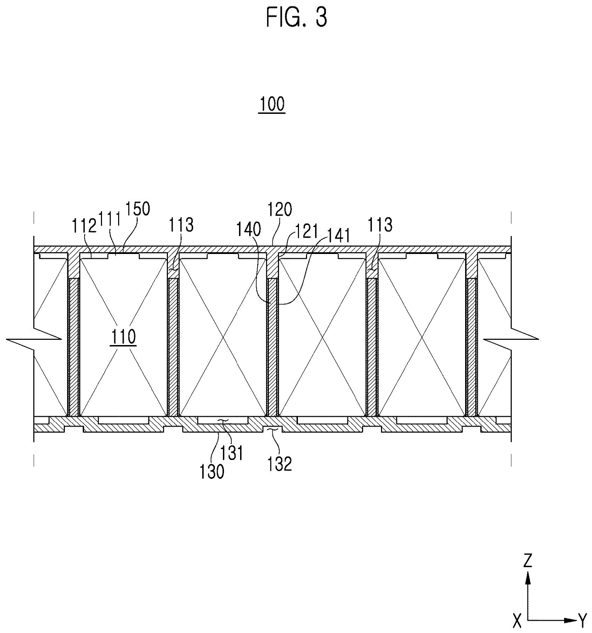

In some embodiments, the inner column 140 may function to transfer heat transferred from the battery cell 110 to the first cover 120 or the second cover 130. That is, the inner column 140 may function to dissipate heat transferred from the battery cell 110 to the outside. Accordingly, the thermal stability of the battery cell 110 may be further improved. A detailed configuration between the inner column 140 and the first and second covers 120 and 130 will be described below with reference to FIG. 3.

In some embodiments, at least one surface of the inner column 140 may be disposed to be in close contact with the battery cell 110. For example, as illustrated, the inner column 140 may be placed such that the side surface portion is in contact with the side surface portion of the corresponding battery cell 110. In some embodiments, the side surface of the inner column 140 may be provided to be adhered to the side surface of the corresponding battery cell 110 through a thermally conductive adhesive.

FIG. 3 is a longitudinal cross-sectional view of the battery module shown in FIG. 1.

Referring to FIG. 3, in some embodiments, the first cover 120 may include a guide rib 121. The guide rib 121 may extend between adjacent battery cells 110. In the illustrated embodiment, the guide rib 121 is formed to extend downward from a bottom surface of the first cover 120 toward the gap 113 between adjacent battery cells 110. The guide rib 121 may extend a predetermined length downward so as to reach an upper end portion of the side surface of the battery cell 110. The guide rib 121 may function to support one end portion of the side surface of the battery cell 110 adjacent to the first cover 120. That is, in the illustrated embodiment, the guide rib 121 may function to support an upper end portion of the side surface of the battery cell 110.

In some embodiments, a plurality of guide ribs 121 may be provided. For example, the plurality of guide ribs 121 may be provided between all of the battery cells 110. Alternatively, the plurality of guide ribs 121 may be provided to correspond to the plurality of inner columns 140 described above. In the illustrated embodiment, the plurality of guide ribs 121 are provided to correspond to each inner column 140.

In some embodiments, the inner column 140 may be fastened to the guide rib 121. For example, one side end portion of the inner column 140 in the third direction may be fastened to the guide rib 121. That is, in the illustrated embodiment, an upper end of the inner column 140 may be fastened to a lower end of the guide rib 121. The inner column 140 may be appropriately supported and assisted by the guide rib 121. The inner column 140 and the guide rib 121 may be fastened in various ways. For example, although not shown, the inner column 140 has an assembly groove at an upper end, and the guide rib 121 has a lower end inserted into the assembly groove so that the guide rib 121 may be fastened to the inner column 140. As another example, the inner column 140 and the guide rib 121 may be fastened through a separate assembly member, or may be fastened through bonding or welding.

In some embodiments, part or all of the first cover 120 may be formed of an insulating plastic material. Alternatively, the first cover 120 may be partially or entirely molded from a metal material, an outer surface of the molded metal material may be insulation-coated, or an insulating part may be assembled and provided on the outer surface of the molded metal material.

In some embodiments, the battery module 100 may include a bus bar 150. The bus bar 150 may be provided to electrically connect the plurality of battery cells 110. That is, the plurality of battery cells 110 provided in the battery module 100 may be connected in series and/or in parallel by the bus bar 150. For example, the plurality of battery cells 110 may be connected in parallel in the battery module 100 as shown, and the battery module 100 may be connected in series to another battery module to form one battery pack 200. However, the specific electrical connection form for the plurality of battery cells 110 may be variously modified as needed, and is not necessarily limited to the examples.

In some embodiments, the bus bar 150 as described above may be integrally provided in the first cover 120. For example, the bus bar 150 and the first cover 120 may be integrally formed by insert injection molding. In this way, the bus bar 150 integrated into the first cover 120 may contribute to improving the assemblability of the battery module 100.

Meanwhile, in some embodiments, the second cover 130 may include a venting flow path 131. The venting flow path 131 may be provided to guide the venting gas discharged from the battery cell 110 to the outside of the battery module 100. Specifically, the battery cell 110 may be provided with a vent on one surface disposed toward the second cover 130. That is, in the illustrated embodiment, the vent may be provided on a lower surface of the battery cell 110. The vent may open according to an internal pressure of the battery cell 110 to guide the venting gas in the battery cell 110 to the outside. In addition, the venting flow path 131 for guiding the venting gas discharged as described above may be provided on an upper surface of the second cover 130. The venting flow path 131 may be provided on one surface of the second cover 130 disposed toward the vent. That is, in the illustrated embodiment, the venting flow path 131 may be provided so that the upper surface of the second cover 130 is concavely recessed in an area corresponding to the lower surface of the battery cell 110. In addition, the venting flow path 131 may extend to an outer edge of the battery module 100 in a plan view to guide the venting gas discharged from the battery cell 110 to the outside of the battery module 100.

In some embodiments, a groove 132 may be provided on a lower surface of the second cover 130 (see FIG. 2). The groove 132 may be provided so that the bottom surface of the second cover 130 is concavely recessed toward the upper side. For reference, the enlarged view of the second cover 130 shown in FIG. 2 shows the lower surface of the second cover 130 as seen from below. In some embodiments, the groove 132 may be provided for proper molding, securing an assembly tolerance, weight reduction, and the like of the second cover 130. In some embodiments, the groove 132 may be provided at a position corresponding to the inner column 140. That is, the groove 132 may be disposed on the lower surface of the second cover 130 at a position corresponding to a position where the inner column 140 is disposed in a plan view. The groove 132 disposed as described above may contribute to improving assemblability with the battery cell 110 by inducing elastic deformation of the second cover 130 at the position where the inner column 140 is disposed.

Meanwhile, in some embodiments, part or all of the inner column 140 may be formed of a material having good thermal conductivity. For example, some or all of the inner column 140 may be made of a metal material. In addition, in some embodiments, the inner column 140 may be partially or entirely provided with an insulating layer. For example, the side surface of the inner column 140 may be disposed to face the side surface of the battery cell 110, and the insulating layer may be provided on the side surface of the inner column 140. The insulating layer may function to electrically insulate the inner column 140 from the battery cell 110. In some embodiments, the insulating layer may be provided as an insulating sheet attached to the side surface of the inner column 140 or an insulating coating applied to the side surface of the inner column 140. In some other embodiments, part or all of the inner column 140 may be provided with an insulating material, and this inner column 140 may appropriately replace the insulating layer described above.

Meanwhile, in some embodiments, the inner column 140 may be bonded to the battery cell 110 through an adhesive layer 141. Specifically, the adhesive layer 141 may be provided between the side surface of the inner column 140 and the side surface of the battery cell 110. In addition, the adhesive layer 141 may be provided to bond the side surface of the inner column 140 and the side surface of the battery cell 110 to each other. Accordingly, the battery cell 110 may be more firmly supported and fixed to the inner column 140.

In some embodiments, the adhesive layer 141 may be provided by curing a liquid adhesive applied to the inner column 140 or the battery cell 110. Alternatively, the adhesive layer 141 may be provided by injecting a liquid adhesive between the inner column 140 and the battery cell 110 after arranging the inner column 140 and the battery cell 110. In some other embodiments, the adhesive layer 141 may be provided by an adhesive member such as an adhesive tape.

In some embodiments, the adhesive layer 141 may be provided as a thermally conductive adhesive. For example, the adhesive layer 141 may be provided as a thermally conductive adhesive having a thermal conductivity of 0.3 W/mK or more. The adhesive layer 141 may function to appropriately transfer heat transferred from the side surface of the battery cell 110 to the side surface of the inner column 140. However, the present disclosure is not limited thereto, and in some cases, the adhesive layer 141 may be selected in consideration of whether or not an appropriate adhesive force is present. For example, the design interval between the inner column 140 and the battery cell 110 and the thickness of the adhesive layer 141, and the like, may be considered, and the thermally conductive adhesive may be properly omitted or replaced.

Meanwhile, in some embodiments, the inner column 140 may be integrally provided with the second cover 130. For example, the inner column 140 may be injection-molded integrally with the second cover 130. Alternatively, the inner column 140 and the second cover 130 may be provided by sintering an integral metal member. The inner column 140 integrally provided with the second cover 130 may contribute to improving the assemblability of the battery module 100. In addition, the inner column 140 integrally provided with the second cover 130 may contribute to improving the heat transfer performance to the second cover 130. That is, the heat transferred from the battery cell 110 may be more smoothly transferred to the second cover 130 through the inner column 140. Accordingly, the heat dissipation performance of the battery cell 110 or the battery module 100 may be improved.

FIG. 4 is a cross-sectional view of the battery module shown in FIG. 1.

Referring to FIG. 4, in some embodiments, adjacent battery cells 110 may have an equilateral triangle shape in a plan view and may be disposed in a dense arrangement structure. In addition, the inner column 140 may be disposed at the center of such battery cells 110. That is, the inner column 140 may be disposed at the center of an equilateral triangle formed by adjacent battery cells 110. In addition, the side surface of the inner column 140 may be bonded to the side surface of the battery cell 110 through the adhesive layer 141.

In some embodiments, the side surface of the inner column 140 as described above may be provided as a curved surface 142 concavely recessed to correspond to the shape of the side surfaces of the adjacent battery cells 110. The curved surface 142 allows the side surface of the inner column 140 to be more completely brought into close contact with the side surface of the battery cell 110. Accordingly, heat transfer from the battery cell 110 to the inner column 140 may be more smoothly performed. In addition, support and fixing of the battery cell 110 through the inner column 140 may be more appropriately performed.

FIG. 5 is a longitudinal cross-sectional view showing a battery pack in which a plurality of battery modules shown in FIG. 3 are combined.

Referring to FIG. 5, in some embodiments, one or more battery modules 100 may be combined and provided in the battery pack 200. For convenience, FIG. 5 illustrates a case where two battery modules 100 are combined. However, the number of battery modules 100 constituting the battery pack 200 may be variously changed as needed, and is not necessarily limited to the example.

In some embodiments, the plurality of battery modules 100 may be electrically connected to each other. That is, the plurality of battery modules 100 constituting the battery pack 200 may be connected in series and/or in parallel. However, in the embodiment of the present disclosure, the specific electrical connection form for the plurality of battery modules 100 is not particularly limited.

Meanwhile, in some embodiments, the battery pack 200 may include a heat sink 210. The heat sink 210 may be provided to support the plurality of battery modules 100 from below. For example, the heat sink 210 may be provided to have a predetermined flat surface area, and the plurality of battery modules 100 may be disposed on the upper surface of the heat sink 210 and supported. Here, the heat sink 210 may be bonded to the second cover 130 of each battery module 100 through a thermal interface material (TIM) 220. For example, the thermal interface material 220 may include thermally conductive grease, a thermally conductive pad, thermally conductive tape, or the like. The thermal interface material 220 may function to promote heat dissipation from the second cover 130 to the heat sink 210.

FIG. 6 is a cross-sectional view showing a battery module according to another embodiment of the present disclosure.

Hereinafter, for convenience, differences from the above-described embodiment will be mainly described.

FIG. 6 shows a battery module 300 in the plane direction corresponding to FIG. 4. Referring to FIG. 6, in some embodiments, a plurality of battery cells 310 may have an arrangement structure different from the above-described dense arrangement structure. For example, the plurality of battery cells 310 may be disposed in parallel in the front-rear and left-right directions as illustrated.

In addition, in some embodiments, a heat dissipation protrusion 343 may be provided on a side surface of an inner column 340. The heat dissipation protrusion 343 may be partially provided on the side surface of the inner column 340 or may be provided on the entire side surface of the inner column 340. Alternatively, the heat dissipation protrusion 343 may be partially provided only on some of the plurality of side surfaces provided in the inner column 340. In the illustrated embodiment, it is exemplified that the heat dissipation protrusions 343 are equally provided on four side surfaces of the inner column 340.

The heat dissipation protrusions 343 may extend in the longitudinal direction of the inner column 340. That is, in the illustrated embodiment, the heat dissipation protrusion 343 may be provided to extend vertically along the side surface of the inner column 340. The vertically extended heat dissipation protrusion 343 may have a function of assisting the assembly between the battery cell 310 and the inner column 340. That is, the battery cell 310 may be properly assembled and fastened to the inner column 340 while sliding in contact with the vertically extended heat dissipation protrusion 343.

In addition, a plurality of heat dissipation protrusions 343 may be provided on the side surface of the inner column 340. In the illustrated embodiment, the heat dissipation protrusion 343 may protrude from the side surface of the inner column 340 in the form of a fine protrusion, so that the plurality of heat dissipation protrusions 343 completely cover the side surface of the inner column 340.

In some embodiments, the heat dissipation protrusion 343 may function to increase a surface area of the inner column 340 to promote heat transfer from the battery cell 310 to the inner column 340. Also, in some embodiments, the heat dissipation protrusion 343 may function to improve the bonding force between the inner column 340 and the battery cell 310. That is, the heat dissipation protrusion 343 may increase a bonding interface area between the side surface of the inner column 340 and the side surface of the battery cell 310 to improve the bonding force between the inner column 340 and the battery cell 310.

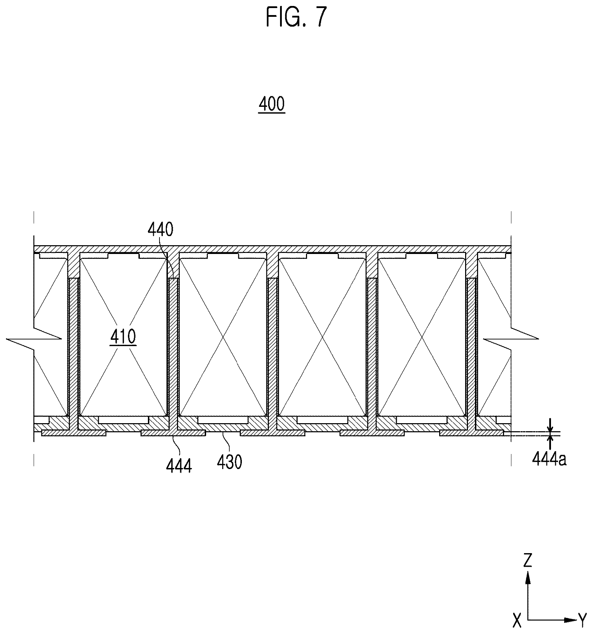

FIG. 7 is a longitudinal cross-sectional view showing a battery module according to still another embodiment of the present disclosure.

Referring to FIG. 7, in some embodiments, an inner column 440 may include a heat dissipation plate 444. Specifically, the inner column 440 may extend in the longitudinal direction as shown, and the heat dissipation plate 444 may be provided at one end (lower end) of the inner column 440 in the longitudinal direction. The heat dissipation plate 444 may be integrally provided in the inner column 440 to dissipate heat transferred from the inner column 440 to the outside.

In some embodiments, the heat dissipation plate 444 may extend to have a predetermined area in a plane direction orthogonal to the length direction of the inner column 440. That is, the inner column 440 may be formed to extend in the vertical direction (Z-axis direction) as shown, and the heat dissipation plate 444 may be formed to extend to a predetermined area in a plane (XY plane) direction orthogonal to the vertical direction at the lower end of the inner column 440.

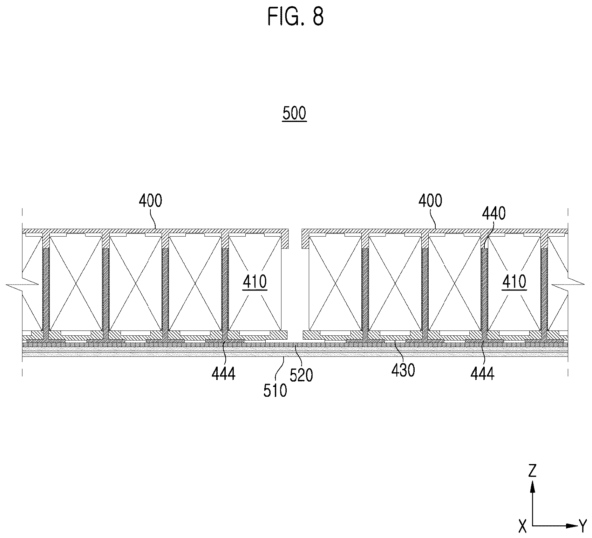

In some embodiments, the heat dissipation plate 444 may be provided such that at least a portion of the heat dissipation plate 444 is exposed to the outside of a second cover 430. For example, the heat dissipation plate 444 may be provided to be exposed to a lower surface of the second cover 430. The heat dissipation plate 444 may be provided to directly exchange heat with a predetermined heat transfer medium outside the second cover 430, and thus the heat dissipation performance of the battery cells 410 through the inner column 440 may be further improved. For example, the heat dissipation plate 444 may be exposed to the lower surface of the second cover 430 and may be configured to directly exchange heat with a heat sink 510 (see FIG. 8).

In order to further improve the function of the heat dissipation plate 444 as described above, in some embodiments, the exposed outer surface of the heat dissipation plate 444 may be provided to form a plane corresponding to the lower surface of the second cover 430. Alternatively, at least a portion of the exposed outer surface of the heat dissipation plate 444 may be disposed at a position lower than the lower surface of the second cover 430. For reference, in the illustrated embodiment, the exposed outer surface of the heat dissipation plate 444 protrudes from the lower surface of the second cover 430 with a predetermined step 444a and is disposed at a position lower than the lower surface of the second cover 430 by a predetermined level. The heat dissipation plate 444 may be in direct contact with a heat transfer medium such as the heat sink 510 to contribute to further improving heat dissipation performance (see FIG. 8).

In some embodiments, the inner column 440 and the heat dissipation plate 444 as described above may be provided as one assembly component distinguished from the second cover 430. In other words, the inner column 440 may be provided as a single assembly part integrally provided with the heat dissipation plate 444, and the inner column 440 may be provided to be properly assembled and fastened to the second cover 430 provided separately.

In the above, the inner column 440 may be formed of a material different from a material of the second cover 430. For example, the inner column 440 may be formed of a material having a relatively high thermal conductivity compared to the second cover 430. For example, the second cover 430 may be made of a polymer resin material such as plastic, and the inner column 440 may be made of a metal-based material having a high thermal conductivity compared to the polymer resin material. In some embodiments, such the inner column 440 may be manufactured by insert injection molding with the second cover 430.

FIG. 8 is a longitudinal cross-sectional view showing a battery pack in which a plurality of battery modules shown in FIG. 7 are combined.

Referring to FIG. 8, one or more battery modules 400 as described above may be combined to form a battery pack 500. In addition, in some embodiments, the heat dissipation plate 444 of each battery module 400 may be directly fastened to the heat sink 510. That is, the heat dissipation plate 444 may be directly fastened to the heat sink 510 without passing through the second cover 430 or the like. In some cases, the heat dissipation plate 444 may be bonded to the heat sink 510 through a thermal interface material 520 to reduce heat loss at the bonding interface. The heat dissipation plate 444 may directly heat-exchange the heat transferred to the inner column 440 with the heat sink 510, thereby implementing more efficient and rapid heat dissipation for the battery cell 410.

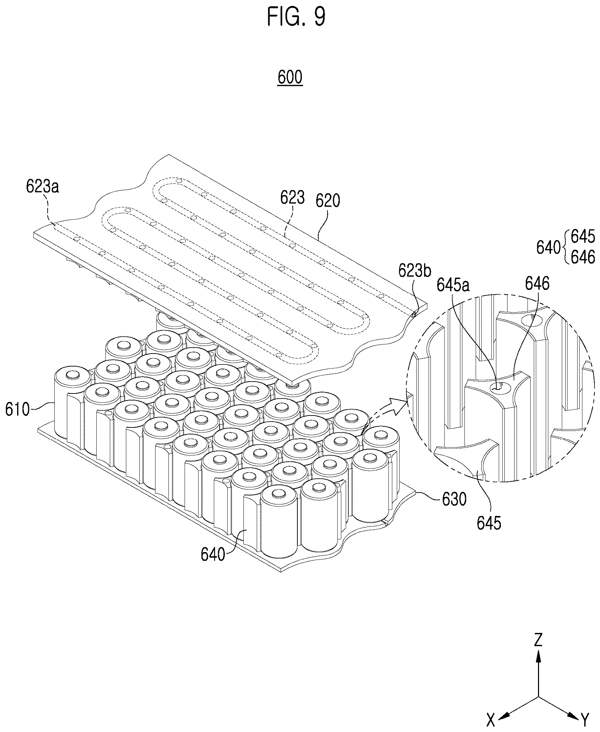

FIG. 9 is an exploded perspective view showing a battery module according to yet another embodiment of the present disclosure.

Referring to FIG. 9, in some embodiments, a plurality of inner columns 640 may be provided. That is, as described above, the inner column 640 may be provided between all of the battery cells 610 or may be selectively provided only between some of the battery cells 610. Here, a hollow 645a may be provided in an inner column 645 among the plurality of inner columns 640. In other words, the inner column 640 may include a first inner column 645 and a second inner column 646, and the hollow 645a may be provided in the first inner column 645. In addition, the second inner column 646 may be provided as a solid shaft without a hollow.

For convenience, when the inner column 640 provided with the hollow 645a is referred to as the first inner column 645, the hollow 645a may be formed to extend in a longitudinal direction of the first inner column 645. In some embodiments, the hollow 645a may extend from an upper end to a lower end of the first inner column 645 to pass through the first inner column 645 vertically. That is, the first inner column 645 may be provided as a hollow shaft having an empty interior.

In some embodiments, the first inner column 645 may be partially provided in a predetermined planar area in consideration of the thermal distribution of the battery module 600 and the like. For example, the first inner column 645 may be partially provided in a central area away from an outer edge portion of the battery module 600 in a plan view. In another example, the first inner column 645 may be partially provided in a predetermined flat area in which heat is relatively concentrated by reflecting the thermal distribution between adjacent battery modules 600 or the arrangement of cooling parts.

In some embodiments, the hollow 645a may be connected to an inner flow path 623 provided in a first cover 620 and/or a second cover 630. That is, the hollow 645a may be connected to the inner flow path 623 provided in the first cover 620 or the inner flow path provided in the second cover 630. Alternatively, both the first cover 620 and the second cover 630 may be provided with an inner flow path, and the hollow 645a may be provided to be connected to each of the inner flow paths of the first cover 620 and the second cover 630. For reference, in the illustrated embodiments, the inner flow path 623 is exemplified as being provided in the first cover 620.

In some embodiments, the inner flow path 623 may be formed to extend along a predetermined flow path trajectory to pass through the entire surface of the first cover 620 or the second cover 630. That is, the inner flow path 623 may extend along a predetermined flow path trajectory on the first cover 620 or the second cover 630 so as to cover the entire plane of the first cover 620 or the second cover 630. The inner flow path 623 may contribute to insulating the plurality of battery cells 610 disposed between the first and second covers 620 and 630 from the outside.

In some embodiments, the inner flow path 623 may be provided to supply and discharge a refrigerant from and to the outside. That is, the inner flow path 623 may receive a refrigerant through an inlet 623a on one side, and the supplied refrigerant may flow along the inner flow path 623 and then be discharged back to the outside through an outlet 623b. In addition, the refrigerant provided to the inner flow path 623 may be introduced into the first inner column 645 through the hollow 645a. The refrigerant introduced into the first inner column 645 may perform heat exchange with a side surface of a corresponding battery cell 610 to dissipate the heat of the battery cell 610 to the outside. Accordingly, the thermal stability of the battery cell 610 may be further improved.

Meanwhile, the illustrated embodiment illustrates a case in which the inner flow path 623 is provided in the first cover 620, but the location, shape, and flow method of the inner flow path 623 may be variously modified as needed and are not necessarily limited to the illustrated example. For example, in some embodiments, the inner flow path 623 may be provided in both the first and second covers 620 and 630, and the refrigerant supplied through the first cover 620 may flow through the first inner column 645 to the second cover 630 and then be discharged back to the outside. Alternatively, in some other embodiments, the inner flow path 623 may be partially provided in a central area of the first and second covers 620 and 630 in which the heat of the battery cell 610 is relatively concentrated to promote heat dissipation in the central area.

As described above, some embodiments of the present disclosure may provide a battery pack.

In addition, some embodiments of the present disclosure may provide a battery pack including cylindrical battery cells.

In addition, some embodiments of the present disclosure may provide a battery pack with improved thermal stability. In some embodiments, the battery pack may include an inner column for transferring heat transferred to a side surface of the battery cell to a first cover and/or a second cover, and such an inner column may contribute to improving the thermal stability of the battery pack.

In addition, some embodiments of the present disclosure may provide a battery pack with improved assemblability. In some embodiments, the first cover, the inner column, and the second cover may function to assist in the arrangement or assembly of battery cells, which may contribute to improving the assemblability of the battery pack.

In addition, some embodiments of the present disclosure may provide a battery pack with improved structural stability. In some embodiments, the first cover, the inner column, and the second cover may form a single structure together with the plurality of battery cells, which may contribute to improving the structural stability of the battery pack.

Some embodiments of the present disclosure can provide a battery pack.

In addition, some embodiments of the present disclosure can provide a battery pack including a cylindrical battery cell.

In addition, some embodiments of the present disclosure can provide a battery pack with improved thermal stability.

In addition, some embodiments of the present disclosure can provide a battery pack with improved assemblability.

In addition, some embodiments of the present disclosure can provide a battery pack with improved structural stability.

Some of the aspects of the present disclosure are as follows:
Aspect 1: A battery pack comprising one or more battery modules, wherein the battery module includes: a plurality of battery cells disposed between a first cover and a second cover; and an inner column extending in a third direction between adjacent battery cells to dissipate heat transferred from side surfaces of the battery cells to at least one of the first cover and the second cover.
Aspect 2: The battery pack of aspect 1, wherein the first cover includes a guide rib extending into a gap between the battery cells, and the guide rib supports one end portion of the side surface of the battery cell adjacent to the first cover.
Aspect 3: The battery pack according to any one of the preceding aspects, wherein one end portion of the inner column in the third direction is fastened to the guide rib and supported by the guide rib.
Aspect 4: The battery pack according to any one of the preceding aspects, wherein the first cover includes a bus bar insert injection molded into the first cover to electrically connect the plurality of battery cells.
Aspect 5: The battery pack according to any one of the preceding aspects, wherein each of the battery cells is provided with a vent on one surface disposed toward the second cover, and the second cover provides a venting flow path which guides venting gas discharged from the vent to an outside of the battery module.
Aspect 6: The battery pack according to any one of the preceding aspects, wherein a side surface of the inner column is provided with a curved surface concavely recessed to correspond to a shape of the side surface of the battery cell, and is provided to be in close contact with the side surface of the battery cell, and wherein at least one of an insulating layer for electrical insulation from the battery cell and an adhesive layer that is bonded to the side surface of the battery cell is provided on a side surface of the inner column.
Aspect 7: The battery pack according to any one of the preceding aspects, wherein a plurality of battery modules are provided, and the battery pack is provided to support the plurality of battery modules, and has a heat sink bonded to the second cover of each battery module through a thermal interface material.
Aspect 8: The battery pack according to any one of the preceding aspects, wherein a plurality of heat dissipation protrusions extending in a longitudinal direction of the inner column are provided on a side surface of the inner column so as to be in contact with the side surface of the battery cell.
Aspect 9: The battery pack according to any one of the preceding aspects, wherein the inner column is provided with a heat dissipation plate at one end in a longitudinal direction.
Aspect 10: The battery pack according to any one of the preceding aspects, wherein the heat dissipation plate is formed to extend to a predetermined area in a plane direction orthogonal to the longitudinal direction of the inner column.
Aspect 11: The battery pack according to any one of the preceding aspects, wherein at least a portion of the heat dissipation plate is disposed to be exposed to an outside of the second cover.
Aspect 12: The battery pack according to any one of the preceding aspects, wherein the exposed outer surface of the heat sink forms a plane corresponding to an outer surface of the second cover, or is located lower than the outer surface of the second cover.
Aspect 13: The battery pack according to any one of the preceding aspects, wherein the exposed outer surface of the heat dissipation plate is bonded to a heat sink disposed on one surface of the second cover through a thermal interface material.
Aspect 14: The battery pack according to any one of the preceding aspects, wherein a plurality of inner columns are provided to correspond to the plurality of battery cells, and one or more of the plurality of inner columns have a hollow extending in a longitudinal direction of the inner column.
Aspect 15: The battery pack according to any one of the preceding aspects, wherein the hollow is connected to an inner flow path provided in at least one of the first cover and the second cover, and the inner flow path is provided to supply and discharge a refrigerant from and to the outside.

The above description is only an example to which the principle of the present disclosure is applied, and other configurations may be further included without departing from the scope of the present disclosure

## Claims

1. A battery pack comprising one or more battery modules,
wherein the battery module includes:
a plurality of battery cells disposed between a first cover and a second cover; and
an inner column extending in a third direction between adjacent battery cells to dissipate heat transferred from side surfaces of the battery cells to at least one of the first cover and the second cover.

2. The battery pack of claim 1, wherein the first cover includes a guide rib extending into a gap between the battery cells, and
the guide rib supports one end portion of the side surface of the battery cell adjacent to the first cover.

3. The battery pack according to any one of the preceding claims, wherein one end portion of the inner column in the third direction is fastened to the guide rib and supported by the guide rib.

4. The battery pack according to any one of the preceding claims, wherein the first cover includes a bus bar insert injection molded into the first cover to electrically connect the plurality of battery cells.

5. The battery pack according to any one of the preceding claims, wherein each of the battery cells is provided with a vent on one surface disposed toward the second cover, and
the second cover provides a venting flow path which guides venting gas discharged from the vent to an outside of the battery module.

6. The battery pack according to any one of the preceding claims, wherein a side surface of the inner column is provided with a curved surface concavely recessed to correspond to a shape of the side surface of the battery cell, and is provided to be in close contact with the side surface of the battery cell,
and wherein at least one of an insulating layer for electrical insulation from the battery cell and an adhesive layer that is bonded to the side surface of the battery cell is provided on a side surface of the inner column.

7. The battery pack according to any one of the preceding claims, wherein a plurality of battery modules are provided, and
the battery pack is provided to support the plurality of battery modules, and has a heat sink bonded to the second cover of each battery module through a thermal interface material.

8. The battery pack according to any one of the preceding claims, wherein a plurality of heat dissipation protrusions extending in a longitudinal direction of the inner column are provided on a side surface of the inner column so as to be in contact with the side surface of the battery cell.

9. The battery pack according to any one of the preceding claims, wherein the inner column is provided with a heat dissipation plate at one end in a longitudinal direction.

10. The battery pack according to any one of the preceding claims, wherein the heat dissipation plate is formed to extend to a predetermined area in a plane direction orthogonal to the longitudinal direction of the inner column.

11. The battery pack according to any one of the preceding claims, wherein at least a portion of the heat dissipation plate is disposed to be exposed to an outside of the second cover.

12. The battery pack according to any one of the preceding claims, wherein the exposed outer surface of the heat sink forms a plane corresponding to an outer surface of the second cover, or is located lower than the outer surface of the second cover.

13. The battery pack according to any one of the preceding claims, wherein the exposed outer surface of the heat dissipation plate is bonded to a heat sink disposed on one surface of the second cover through a thermal interface material.

14. The battery pack according to any one of the preceding claims, wherein a plurality of inner columns are provided to correspond to the plurality of battery cells, and
one or more of the plurality of inner columns have a hollow extending in a longitudinal direction of the inner column.

15. The battery pack according to any one of the preceding claims, wherein the hollow is connected to an inner flow path provided in at least one of the first cover and the second cover, and
the inner flow path is provided to supply and discharge a refrigerant from and to the outside.
